# EUROPEAN PATENT APPLICATION

(11) **EP 2 301 799 A1**
(43) Date of publication of application: **30.03.2011**
(21) Application number: 09766764.6
(22) Date of filing: 10.02.2009
(51) Int. Cl.: B60P 3/00

(54) **OUTDOOR MOVABLE HOT WATER SUPPLY APPARATUS**

(30) Priority: 17.06.2008 KR 20080056982
(71) Applicant: Park, Dong Su, Inje-gun, Gangwon-do 252-822 (KR)
(72) Inventor: Park, Dong Su, Inje-gun, Gangwon-do 252-822 (KR)
(74) Representative: Lang, Christian
(86) International application number: PCT/KR2009/000612
(87) International publication number: WO 2009/154339

(57) **Abstract**

The present invention relates to an outdoor movable hot water supply apparatus for heating water with the heat generated by burning fuel to supply the heated water, the apparatus including: a burner for generating combustion heat; a tank for storing water therein; a heat exchanger having a heat circulation pipe penetratingly disposed at the lower portion of the tank so as to circulate the combustion heat generated from the burner into the tank and a plurality of water circulation pipes penetratingly disposed spirally along the heat circulation pipe in such a manner as to be equally spaced apart from each other so as to allow the water into the tank to be circulated; and a truck for mounting and moving the tank thereon.

## Description

### [Technical Field]

The present invention relates to an outdoor movable hot water supply apparatus that is provided by improving a structure of a heat exchanger to raise heat efficiency, and that is disposed and maintained with ease, while being movable in a simple manner.

### [Background Art]

In general, a hot water supply apparatus is designed to heat water with the heat generated by burning fuel and to supply the heated water, and the apparatus includes a burner for generating combustion heat, a tank for storing water therein, and a heat exchanger adapted to circulate the combustion heat generated from the burner into the tank so as to heat the water in the tank.

Such conventional hot water supply apparatuses are fixedly disposed indoors, such that they are not movable to outdoor festival sites or training camps.

More particularly, for example, during the winter training of soldiers they don't use hot water outdoors and are thus frozen easily, which causes their force to be decreased.

Additionally, the heat exchanger in the conventional hot water supply apparatus is structured to be bent to a zigzag-like shape to heat the water brought into contact with the surface thereof, thereby causing the heat exchange efficiency to be lowered. Furthermore, the dust or soot generated during the combustion of the fuel through the burner is circulated into the heat exchanger together with the combustion heat and is settled inside the heat exchanger, which also causes the heat exchange efficiency to be lowered. In this case, it is difficult to separate the bent heat exchanger from the tank, and even though the heat exchanger is separated from the tank, it is also not easy to repair the interior of the heat exchanger.

### [Disclosure]

### [Technical Problem]

Accordingly, the present invention has been made in view of the above-mentioned problems occurring in the prior art, and it is an object of the present invention to provide an outdoor movable hot water supply apparatus that removes many inconveniences that a heater, a heating tank, and other accessory equipment should be prepared and combined to one another on a site, so as to provide a large amount of hot water in outdoor festival sites or in training camps, thereby making it difficult to provide installation area or technical personnel for a hot water supply apparatus in an outside environment where it is hard to supply the above-mentioned equipment, and that solves a conventional problem that a substantially long period of time is required to heat a large amount of water stored in a tank by means of a heat exchanger.

It is another object of the present invention to provide an outdoor movable hot water supply apparatus that is capable of being disassembled (upon removal of scale on a heat exchanger) in a simple manner so as to solve a conventional problem that since a tank and a heat exchanger are formed of a unitary body and are thus difficult to be disassembled, foreign materials settled inside the heat exchanger are hard to be removed.

It is yet another object of the present invention to provide an outdoor movable hot water supply apparatus that has a heat exchanger disposed at the bottommost portion of a tank so as to maximize a hydrothermal effect caused by a temperature difference using natural convection.

### [Technical Solution]

To accomplish the above objects, according to the present invention, there is provided an outdoor movable hot water supply apparatus for heating water with the heat generated by burning fuel to supply the heated water, the apparatus including: a burner for generating combustion heat; a tank for storing water therein; a heat exchanger having a heat circulation pipe penetratingly disposed at the lower portion of the tank so as to circulate the combustion heat generated from the burner into the tank and a plurality of water circulation pipes penetratingly disposed spirally along the heat circulation pipe in such a manner as to be equally spaced apart from each other so as to allow the water into the tank to be circulated; and a truck for mounting and moving the tank thereon.

According to the present invention, preferably, each of the water circulation pipes is screwed along an outer peripheral surface between both ends thereof so as to enlarge the surface area, and the heat circulation pipe has a plurality of fixing parts adapted to fix both ends of each of the water circulation pipes in a state where the water circulation pipes are penetratingly disposed therethrough.

According to the present invention, preferably, each of the fixing parts of the heat circulation pipe includes an inlet portion formed protrudedly from an outer peripheral surface of the heat circulation pipe so as to tightly cover each end portion of the water circulation pipe, a cap adapted to be fastened with the inlet portion and having a round locking protrusion formed along the end portion thereof so as to fixedly lock each end portion of the water circulation pipe, and a sealing member adapted to be fitted between the inlet portion and the cap so as to maintain the air tightness between the inlet portion and the water circulation pipe.

According to the present invention, preferably, each of the water circulation pipes is disposed to be inclined with a given angle from a right angle on the center line of the heat circulation pipe.

According to the present invention, preferably, the tank has a coupling member through which the heat exchanger is penetratingly disposed, the coupling member having a larger diameter than the length of each of the water circulation pipes, and the heat circulation pipe has a flange disposed along the end portion thereof in such a manner as to be coveringly fastened with the coupling member.

According to the present invention, preferably, between the burner and the heat exchanger is provided a turbo adapted to completely burn the fuel not burnt from the burner so as to increase the combustion heat, and the burner and the turbo are separable from the heat exchanger.

According to the present invention, preferably, the tank has a supply pipe provided at the underside thereof in such a manner as to be connected to a water system to supply water to the tank and a discharge pipe provided at the top thereof in such a manner as to discharge hot water raised by the pressure of the water flowing through the supply pipe into the tank.

### [Advantageous Effect]

Accordingly, the outdoor movable hot water supply apparatus according to the present invention can be simply moved to outdoor festival sites or training camps through the truck, thereby increasing the utility of the apparatus, and can heat a large amount of water rapidly through the improvement of the structure of the heat exchanger, thereby providing many conveniences in use.

Furthermore, according to the present invention, the separation of the heat exchanger from the tank and the disassembling of the parts of the heat exchanger itself are carried out in a simple way, thereby providing the easiness of the maintenance and further preventing heat efficiency from being lowered.

Also, the present invention supplies water at a predetermined pressure by the connection of the supply pipe to a water system, while continuously discharging relatively hot water through the discharge pipe formed on the top portion of the tank, thereby improving the utility of the apparatus.

Additionally, according to the present invention, the mounting of the turbo permits the fuel to be completely burnt, thereby improving the combustion heat and effectively preventing foreign materials from being settled.

### [Description of Drawings]

FIG.1 is an exemplary view showing an outdoor movable hot water supply apparatus according to the present invention.
FIG.2 is a perspective view showing a heat exchanger adopted in the outdoor movable hot water supply apparatus according to the present invention.
FIG.3 is a front view showing the heat exchanger adopted in the outdoor movable hot water supply apparatus according to the present invention.
FIG.4 is a horizontal sectional view showing the heat exchanger adopted in the outdoor movable hot water supply apparatus according to the present invention.
FIG.5 is a vertical sectional view showing the heat exchanger adopted in the outdoor movable hot water supply apparatus according to the present invention.
FIG.6 is a separate view showing the main parts of the outdoor movable hot water supply apparatus according to the present invention.
FIG.7 is an exemplary view showing the operating state of the outdoor movable hot water supply apparatus according to the present invention.
FIG.8 is an exemplary view showing another usage of the outdoor movable hot water supply apparatus according to the present invention.

### [Best Mode for Invention]

Hereinafter, an explanation on an outdoor movable hot water supply apparatus according to the present invention will be in detail given with reference to the attached drawings.

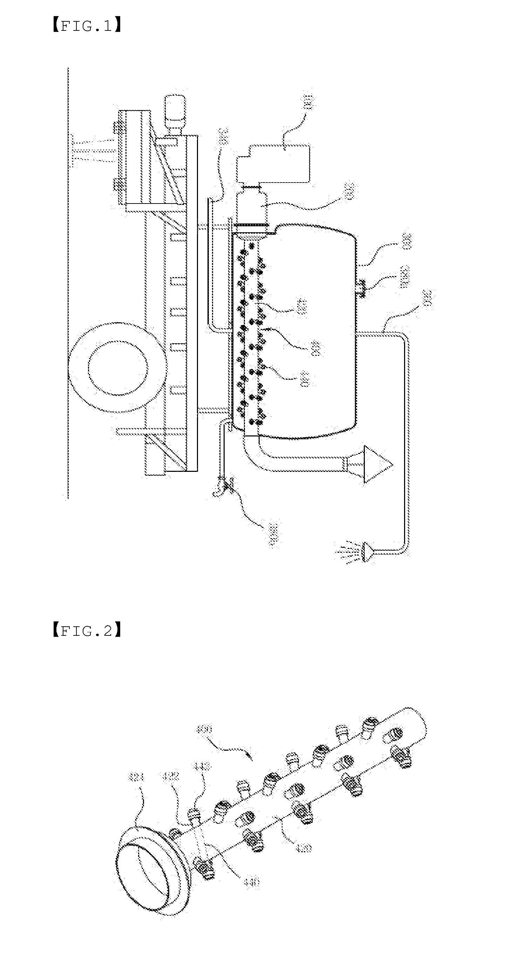

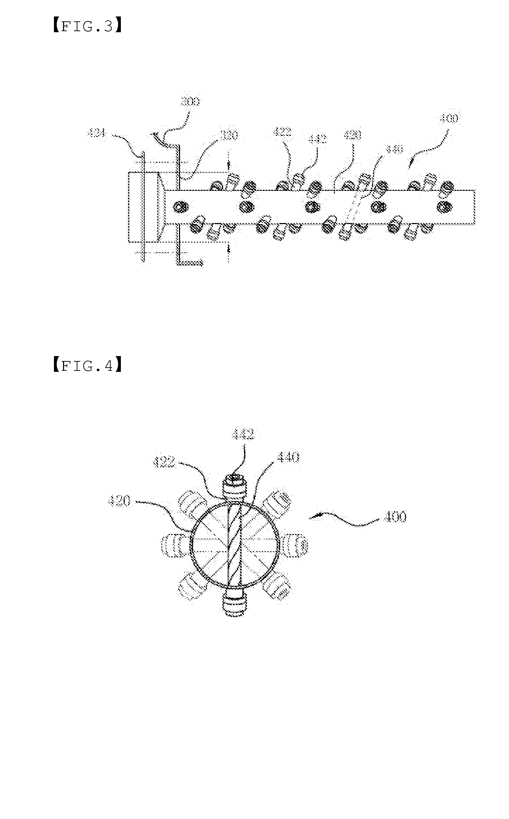

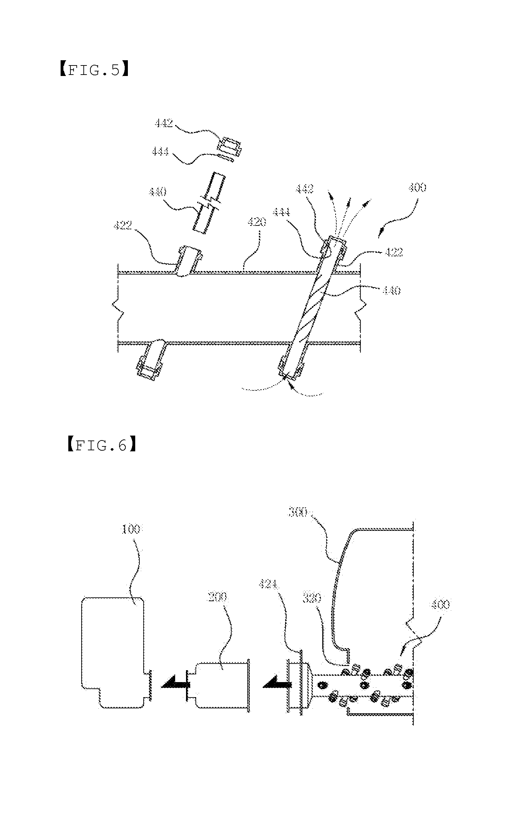

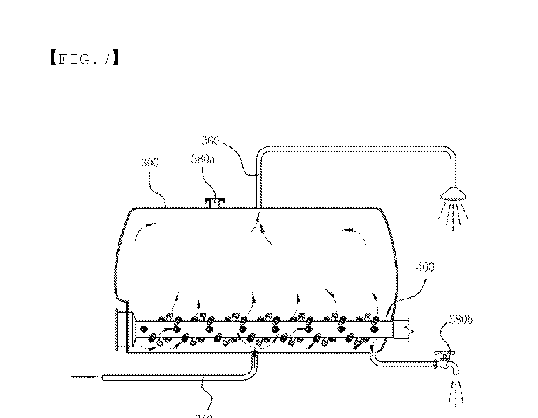

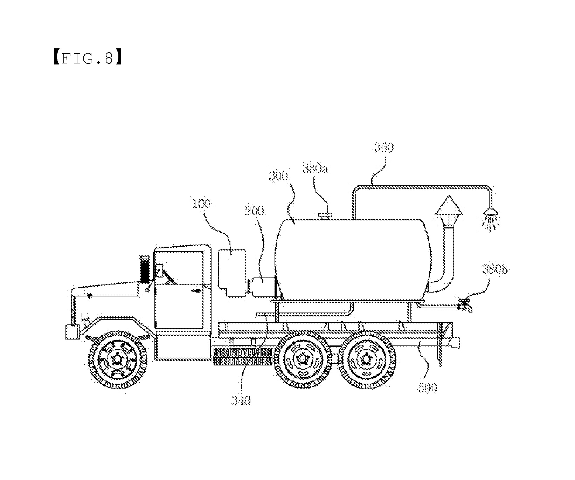

FIG.1 is an exemplary view showing an outdoor movable hot water supply apparatus according to the present invention, FIG.2 is a perspective view showing a heat exchanger adopted in the outdoor movable hot water supply apparatus according to the present invention, FIG.3 is a front view showing the heat exchanger adopted in the outdoor movable hot water supply apparatus according to the present invention, FIG.4 is a horizontal sectional view showing the heat exchanger adopted in the outdoor movable hot water supply apparatus according to the present invention, FIG.5 is a vertical sectional view showing the heat exchanger adopted in the outdoor movable hot water supply apparatus according to the present invention, FIG.6 is a separate view showing the main parts of the outdoor movable hot water supply apparatus according to the present invention, FIG.7 is an exemplary view showing the operating state of the outdoor movable hot water supply apparatus according to the present invention, and FIG.8 is an exemplary view showing another usage of the outdoor movable hot water supply apparatus according to the present invention.

As shown in FIGS.1 to 8, an outdoor movable hot water supply apparatus according to the present invention includes a burner 100 for generating combustion heat, a tank 300 for storing water therein, a heat exchanger 400 penetratingly disposed at the lower portion of the tank 300, and a truck 500 for stably mounting the tank thereon.

As shown in FIGS.1 and 6 to 8, the burner 100 burns fuel like oil, gas and so on and generates high temperature combustion heat therefrom, which is used with a general burner.

As shown in FIGS.1 and 6 to 8, the tank 300 stores water therein and generally has a supply opening 380a formed on the top portion thereof so as to supply water in the tank 300 and a faucet 380b disposed at the underside portion thereof so as to discharge water from the tank 300.

Accordingly, if the water supplied through the supply opening 380a to the interior of the tank 300 is heated, the heated water can be used through the faucet 380b disposed at the underside portion of the tank 300.

In the meanwhile, for the use of an outdoor place where a water system is provided, the tank 300 has a supply pipe 340 provided at the underside thereof in such a manner as to be connected to the water system to supply water to the tank 300 and a discharge pipe 360 provided at the top thereof in such a manner as to discharge hot water raised by the pressure of the water flowing through the supply pipe 340 into the tank 300. That is, if water is supplied at a predetermined pressure by connecting the outdoor water system through the supply pipe 340 provided at the underside of the tank 300, the water supplied to the interior of the tank 300 is heated and raised through the heat exchanger 400, and the raised water is discharged through the discharge pipe 360 by the pressure of water flowing into the tank 300. The discharge pipe 360 provided on the top portion of the tank 300 can be used as a shower.

As shown in FIGS.2 to 5, the heat exchanger 400 includes a heat circulation pipe 420 penetratingly disposed at the lower portion of the tank 300 so as to circulate the combustion heat generated from the burner 100 into the tank 300 and a plurality of water circulation pipes 440 penetratingly disposed spirally along the heat circulation pipe 320 in such a manner as to be equally spaced apart from each other so as to allow the water into the tank 300 to be circulated. That is, the heat exchanger 400 is composed of the heat circulation pipe 420 adapted to circulate the combustion heat into the tank 300 and the plurality of water circulation pipes 440 adapted to easily heat the water stored in the tank 300 while the water is being circulated into the heat circulation pipe 420. In the meanwhile, the heat exchanger 400 is disposed at the lowermost portion of the tank 300 such that cold water going to the bottom of the tank 300 because of its low density can be effectively heated.

As shown in FIGS.4 and 5, each of the water circulation pipes 440 is screwed along an outer peripheral surface between both ends thereof so as to enlarge the surface area, and the heat circulation pipe 420 has a plurality of fixing parts adapted to fix the both ends of each of the water circulation pipes 440 in a state where the water circulation pipes 440 are penetratingly disposed therethrough. In more detail, each of the water circulation pipes 440 is flat around the outer periphery of both ends thereof and is screwed along the outer peripheral surface between both ends thereof positioned inside the heat circulation pipe 420. In this case, a maximum diameter of the screwed outer peripheral surface of each of the water circulation pipes 440 is equal to or smaller than a diameter of each end thereof.

As shown in FIG.5, each of the fixing parts for fixing each of the water circulation pipes 440 to the heat circulation pipe 420 includes an inlet portion 422 formed protrudedly from an outer peripheral surface of the heat circulation pipe 420 so as to tightly cover each end portion of the water circulation pipe 440, a cap 442 adapted to be fastened with the inlet portion 422 and having a round locking protrusion formed along the end portion thereof so as to fixedly lock each end portion of the water circulation pipe 440, and a sealing member 444 adapted to be fitted between the inlet portion 422 and the cap 442 so as to maintain the air tightness between the inlet portion 422 and the water circulation pipe 440. At this time, the cap 442 serves to allow water to gently flow into the water circulation pipe 440, while fixing each end portion of the water circulation pipe 440 by means of the locking protrusion. Also, the cap 442 is screw-fastened to the inlet portion 422.

Each of the water circulation pipes 440 is disposed to be inclined with a given angle from a right angle on the center line of the heat circulation pipe 420. In other words, each of the water circulation pipes 440 is formed to be inclined with a given angle to a direction along which the combustion heat flows, such that their surface area can be more enlarged and the gentle flow of the combustion heat can be achieved.

On the other hand, as shown in FIGS.1, 6 and 8, between the burner 100 and the heat exchanger 400 is provided a turbo 200 adapted to completely burn the fuel not burnt from the burner 100 so as to increase the combustion heat. As appreciated from general boilers, the turbo 200 reheats ignited heat gas and completely burns the incomplete combustion gas so as to reduce the formation of sediment deposits such as nitrogen oxides and carbon in the heat exchanger, thereby preventing the performance of the heat exchanger from being deteriorated.

The turbo 200 burns again the fuel not burnt from the burner 100 by the supply of compressed air, while rapidly supplying the combustion heat generated from complete combustion gas to the heat exchanger 400. At this time, as shown in FIG.6, the burner 100 and the turbo 200 are separable from the heat exchanger 400 or the tank 300 upon the movement of the apparatus according to the present invention.

As shown in FIGS. 3 and 6, also, the tank 300 has a coupling member 320 through which the heat exchanger 400 is penetratingly disposed, the coupling member 320 having a larger diameter than the length of each of the water circulation pipes 440, and the heat circulation pipe 420 has a flange 424 disposed along the end portion thereof in such a manner as to be coveringly fastened with the coupling member 320 of the tank 300. Accordingly, separating the flange 424 from the heat circulation pipe 420 allows the heat exchanger 400 to be easily separated from the tank 300, and as mentioned above, separating of the water circulation pipes 440 from the heat circulation pipe 420 allows the settled foreign materials or dusts to be simply removed therefrom, thereby preventing the heat efficiency from being decreased.

The truck 500 mounts the tank 300 thereon for movement. That is, as shown in FIG.1, the truck 500 is pulled by another vehicle, or is mounted and moved on a vehicle to be driven.

As set forth in the foregoing, the outdoor movable hot water supply apparatus according to the present invention can be simply moved to outdoor festival sites or training camps through the truck, thereby increasing the utility of the apparatus, and can heat a large amount of water rapidly through the improvement of the structure of the heat exchanger, thereby providing many conveniences in use. Furthermore, according to the present invention, the separation of the heat exchanger from the tank and the disassembling of the parts of the heat exchanger itself are carried out in a simple way, thereby providing the easiness of the maintenance and further preventing heat efficiency from being lowered. Additionally, according to the present invention, the mounting of the turbo permits the fuel to be completely burnt, thereby improving the combustion heat and effectively preventing foreign materials from being settled.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An outdoor movable hot water supply apparatus for heating water with the heat generated by burning fuel to supply the heated water, the apparatus comprising:
a burner 100 for generating combustion heat;
a tank 300 for storing water therein;
a heat exchanger 400 having a heat circulation pipe 420 penetratingly disposed at the lower portion of the tank 300 so as to circulate the combustion heat generated from the burner 100 into the tank 300 and a plurality of water circulation pipes 440 penetratingly disposed spirally along the heat circulation pipe 420 in such a manner as to be equally spaced apart from each other so as to allow the water into the tank 300 to be circulated; and
a truck 500 for mounting and moving the tank 300 thereon.

2. The outdoor movable hot water supply apparatus according to claim 1, wherein each of the water circulation pipes 440 is screwed along an outer peripheral surface between both ends thereof so as to enlarge the surface area, and the heat circulation pipe 420 has a plurality of fixing parts adapted to fix the both ends of each of the water circulation pipes 440 in a state where the water circulation pipes 440 are penetratingly disposed therethrough.

3. The outdoor movable hot water supply apparatus according to claim 2, wherein each of the fixing parts of the heat circulation pipe includes an inlet portion 422 formed protrudedly from an outer peripheral surface of the heat circulation pipe 420 so as to tightly cover each end portion of the water circulation pipe 440, a cap 442 adapted to be fastened with the inlet portion 422 and having a round locking protrusion formed along the end portion thereof so as to fixedly lock each end portion of the water circulation pipe 440, and a sealing member 444 adapted to be fitted between the inlet portion 422 and the cap 442 so as to maintain the air tightness between the inlet portion 422 and the water circulation pipe 440.

4. The outdoor movable hot water supply apparatus according to any one of claims 1 to 3, wherein each of the water circulation pipes 440 is disposed to be inclined with a given angle to a direction along which the combustion heat flows from a right angle on the center line of the heat circulation pipe.

5. The outdoor movable hot water supply apparatus according to claim 1, wherein the tank 300 has a coupling member 320 through which the heat exchanger 400 is penetratingly disposed, the coupling member 320 having a larger diameter than the length of each of the water circulation pipes 440, and the heat circulation pipe 420 has a flange 424 disposed along the end portion thereof in such a manner as to be coveringly fastened with the coupling member 320.

6. The outdoor movable hot water supply apparatus according to claim 1, wherein between the burner 100 and the heat exchanger 400 is provided a turbo 200 adapted to completely burn the fuel not burnt from the burner 100 so as to increase the combustion heat, and the burner 100 and the turbo 200 are separable from the heat exchanger 400.

7. The outdoor movable hot water supply apparatus according to claim 1, wherein the tank 300 has a supply pipe 340 provided at the underside thereof in such a manner as to be connected to a water system to supply water to the tank 300 and a discharge pipe 360 provided at the top thereof in such a manner as to discharge hot water raised by the pressure of the water flowing through the supply pipe 340 into the tank 300.
